(19)

**Europäisches Patentamt**
**European Patent Office**
**Office européen des brevets**

(11)    **EP 3 798 245 A1**

(12)    **EUROPEAN PATENT APPLICATION**

(43) Date of publication:
**31.03.2021  Bulletin 2021/13**

(21) Application number: **19212080.6**

(22) Date of filing: **28.11.2019**

(51) Int Cl.:
*C08G 18/09* (2006.01)        *C08G 18/16* (2006.01)
*C08G 18/20* (2006.01)        *C08G 18/42* (2006.01)
*C08G 18/76* (2006.01)        *C08G 18/79* (2006.01)
*C08J 9/14* (2006.01)          *C08J 9/08* (2006.01)
*C08K 5/5419* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **27.09.2019  JP 2019176359**

(71) Applicant: **Covestro Intellectual Property GmbH & Co. KG**
**51373 Leverkusen (DE)**

(72) Inventors:
• **MOMII, Toshikazu**
**655-0048 Tarumi-ku,**
**Kobe-shi,**
**Hyogo-ken (JP)**

• **YOSHIHARA, Hirokazu**
**661-0031 Amagasaki-shi,**
**Hyogo-ken (JP)**
• **ASHIHARA, Masayuki**
**Itami-shi,**
**664-0884 Hyogo-ken (JP)**
• **KASHIWAMOTO, Yuudai**
**577-0007 Higashiosaka-city,**
**Osaka Prefecture,**
**Osaka (JP)**

(74) Representative: **Levpat**
**c/o Covestro AG**
**Gebäude 4825**
**51365 Leverkusen (DE)**

(54)    **COMPOSITION FOR FORMING POLYISOCYANURATE FOAM AND POLYISOCYANURATE FOAM**

(57)    [Problem] To provide a composition capable of forming a polyisocyanurate foam enabling excellent surface quality, particularly, smoothness of a formed article.

[Solution] The present invention is a composition for forming a polyisocyanurate foam, the composition comprising a polyol; a polyisocyanate; and a blowing agent, wherein the blowing agent comprises a hydrofluoroolefin, at least one carboxylic acid selected from the group consisting of a monocarboxylic acid and a dicarboxylic acid, and water, and the amount of water contained in the composition is not more than 0.5% by mass.

EP 3 798 245 A1

## Description

Technical Field

The present invention relates to a composition for forming a polyisocyanurate foam and a polyisocyanurate foam which is a formed product of the composition, particularly, a polyisocyanurate foam provided with a surface material.

Background Art

Among resin foams, a polyurethane foam (also simply referred to as urethane foam) is widely used as a foam-forming insulating material because of its excellent insulation efficiency. A polyurethane foam is usually produced by mixing a polyol and a polyisocyanate together with, for example, a catalyst, a blowing agent, and a foam stabilizer appropriately blended as necessary and by foaming the mixture.

Water and fluorocarbons such as chlorofluorocarbons (CFC), hydrochlorofluorocarbons (HCFC), and hydrofluorocarbons (HFC) are used as the blowing agent. In recent years, hydrofluoroolefins (HFO) or the like is also used as a non-fluorocarbon blowing agent (see, for example, JP 2018-119034 A (Patent Literature 1)).

In addition, there is proposed a technique using the function of formic acid as a blowing agent. JP 2005-307146 A (Patent Literature 2) discloses a rigid polyurethane foam obtained by mixing a polyisocyanate component, a polyol component, a catalyst, and a blending solution comprising other auxiliary agents, and using carbon dioxide gas, as a blowing agent, generated by a reaction between the polyisocyanate component and a component in the blending solution to form a foam, characterized in that a formic acid block catalyst is used as the catalyst, and carbon dioxide gas generated by a reaction of the formic acid block catalyst and the polyisocyanate component is used as the blowing agent to form a foam. Accordingly, in a complete water-blown rigid polyurethane foam foamed by using carbon dioxide gas, as a blowing agent, generated by a reaction between water and a polyisocyanate, it is possible to obtain a sufficient foam ratio in addition to reduction in amount of water used. In addition, it is possible to increase storage stability of a polyol premix and to maintain reactivity of the polyol premix over a long period of time.

Furthermore, JP 2014-91827 A (Patent Literature 3) discloses a catalyst composition for producing a polyurethane resin, which comprises double salt containing two or more kinds of carboxylate anions and one or more kinds of cations, wherein one of the carboxylate anions is formate anion, and wherein the catalyst composition also functions as a blowing agent. Accordingly, it is possible to provide a homogeneous and transparent catalyst composition which serves as a blowing agent at the time of foaming in production of a rigid polyurethane foam or a rigid polyisocyanurate foam, and has excellent dimensional stability.

**Citation List**

Patent Literature

Patent Literature 1: JP 2018-119034 A
Patent Literature 2: JP 2005-307146 A
Patent Literature 3: JP 2014-91827 A

**Summary of Invention**

Technical Problem

Similarly to a polyurethane foam, a polyisocyanurate foam is known as a resin foam obtained from a polyol and a polyisocyanate. An isocyanurate ring is generated from a trimerization reaction of isocyanates. A resin foam having an isocyanurate ring structure in definite proportion or more is distinguished from a polyurethane foam, being referred to as "polyisocyanurate foam." Including an isocyanurate ring structure, a polyisocyanurate foam has high flame retardancy.

The present inventors have studied the use of a hydrofluoroolefin (HFO) as a blowing agent for a polyisocyanurate foam and found the following problem. That is, when a polyisocyanurate foam is formed in an integrated manner with a surface material, smoothness of the surface material of a resulting formed article is inferior to that of a polyisocyanurate foam using other blowing agents, leading to deterioration in surface quality.

Accordingly, it is an object of the present invention to solve the above-mentioned problems in the conventional arts and to provide a composition for forming a polyisocyanurate foam that enables excellent surface quality, particularly, smoothness of a formed article. It is another object of the present invention to provide a polyisocyanurate foam formed from the composition, particularly, a polyisocyanurate foam provided with a surface material.

Solution to Problem

The present inventors have further studied to solve the problems in the conventional arts and found that the use of a hydrofluoroolefin (HFO) as a blowing agent shrinks a polyisocyanurate foam and that the shrinkage tends to deteriorate smoothness of a surface material when forming the polyisocyanurate foam in an integrated manner with the surface material. A polyisocyanurate foam is typically formed in the following manner:

(1) foam formation by a reaction between a polyisocyanate and water, (2) formation of a urethane bond by a reaction of a polyisocyanate and a polyol, (3) formation of an isocyanurate ring by a trimerization reaction of polyisocyanates. The reaction starts in the above order, but when an HFO is used as a blowing agent, the HFO volatilizes before producing bubbles through the foam formation in the process (1). Such volatilization is thought to cause shrinkage of the polyisocyanurate foam.

Accordingly, the present inventors have intensively studied to achieve the above object and found that, when in a composition for forming a polyisocyanurate foam comprising a hydrofluoroolefin as a blowing agent a carboxylic acid selected from a monocarboxylic acid or a dicarboxylic acid is further used as a blowing agent, it is possible to form a polyisocyanurate foam that enables excellent smoothness of a surface material of a formed article, and as a result, the invention has been accomplished.

That is, a composition for forming a polyisocyanurate foam of the present invention comprises a polyol; a polyisocyanate; and a blowing agent, in which the blowing agent comprises a hydrofluoroolefin, at least one carboxylic acid selected from the group consisting of a monocarboxylic acid and a dicarboxylic acid, and water, and the amount of water contained in the composition is not more than 0.5% by mass.

In a preferred embodiment of the composition for forming a polyisocyanurate foam of the present invention, the carboxylic acid has a molecular weight of not more than 200.

In another preferred embodiment of the composition for forming a polyisocyanurate foam of the present invention, the monocarboxylic acid is formic acid.

In another preferred embodiment of the composition for forming a polyisocyanurate foam of the present invention, the dicarboxylic acid is selected from glutaric acid and succinic acid.

Furthermore, a polyisocyanurate foam of the present invention is formed from the aforementioned composition for forming a polyisocyanurate foam.

In a preferred embodiment of the polyisocyanurate foam of the present invention, the polyisocyanurate foam is provided with a surface material.

In another preferred embodiment of the polyisocyanurate foam of the present invention, the surface material is a metal surface material.

Advantageous Effects of Invention

According to a composition for forming a polyisocyanurate foam of the present invention, it is possible to provide a composition capable of forming a polyisocyanurate foam enabling excellent surface quality, particularly, smoothness of a formed article. In addition, according to a polyisocyanurate foam of the present invention, it is possible to provide a polyisocyanurate foam formed from the composition, particularly, a polyisocyanurate foam provided with a surface material.

Description of Embodiments

A composition for forming a polyisocyanurate foam of the present invention (hereinafter simply referred to as "composition of the present invention") will now be described in detail. The composition of the present invention is a composition comprising a polyol, a polyisocyanate, and a blowing agent. The composition of the present invention is used for forming a polyisocyanurate foam. In addition, the composition of the present invention is also referred to as a raw material composition for a polyisocyanurate foam.

A polyisocyanurate foam is a resin foam obtained from a polyol and a polyisocyanate, as similar to a polyurethane foam, and comprises a polymer having a urethane bond. However, polyisocyanurate foams are distinguished from polyurethane foams because the former foams have isocyanurate ring structures in definite proportion or more. Isocyanurate rings generated by trimerization reactions of isocyanates are bonded to polymers having urethane bonds, but part of the isocyanurate rings may exist in a polyisocyanurate foam as trimers unbonded to the polymers having the urethane bonds. While a resin constituting a polyurethane foam is referred to as "urethane resin", a resin constituting a polyisocyanurate foam is also referred to as "polyisocyanurate resin."

In this specification, the polyisocyanurate foam refers to one having an isocyanate index of 150 or more and using a trimerization catalyst.

The polyol used for the composition of the present invention is a compound having a plurality of hydroxyl groups and is preferably a polymeric polyol. Specific examples of the polyol include polyether polyols, polyester polyols, polycarbonate polyols, polyester ether polyols, polyester polycarbonate polyols, polylactone polyols, polybutadiene polyols, polymer polyols, and silicone polyols. These polyols may be used alone or in combination of two or more.

Among the polyols, examples of the polyether polyols include polyaddition products of cyclic ethers and condensates of polyhydric alcohols. Here, examples of the cyclic ethers include styrene oxide, ethylene oxide, propylene oxide, tetrahydrofuran, butylene oxide, and epichlorohydrin. These cyclic ethers may be used alone or in combination of two or more. Examples of the polyhydric alcohols include diols such as ethanediol, diethylene glycol, triethylene glycol, tetraethylene glycol, 1,2-propanediol, dipropylene glycol, tripropylene glycol, tetrapropylene glycol, 1,3-propanediol, 1,4-butanediol, 1,3-butanediol, 2,3-butanediol, 1,5-pentanediol, 1,6-hexanediol, 2,2-dimethyl-1,3-propanediol, 1,4-dihydroxycyclohexane, 1,4-dimethylolcyclohexane, 1,8-octanediol, 1,10-decanediol, and 1,12-dodecanediol, and trifunctional or higher functional polyols such as trimethylolpropane, glycerol, and pentaerythritol. These polyhydric alcohols may be used alone or in combination of two or more. For example, a polyaddition product of tetrahydrofuran is known as polytetramethylene ether glycol (PTMG).

Polyester polyols can be produced by adjusting production conditions of polyesters. Examples of the polyester polyols include polyesters having hydroxyl groups at least at both ends of the main chain, more specifically, linear polyester polyols or slightly branched polyester polyols. Polyester polyols can be prepared by known methods using aliphatic, alicyclic, or aromatic dicarboxylic acids, diols, and optionally polyhydric carboxylic acids and/or trifunctional or higher functional polyols.

Polylactone polyols are homopolymers or copolymers of lactones such as $\varepsilon$-caprolactone, $\beta$-butyrolactone, $\gamma$-butyrolactone, $\gamma$-valerolactone, and $\delta$-valerolactone. Examples of the polylactone polyols include polylactones having hydroxyl groups at least at both ends of the main chain.

Polycarbonate polyols can be produced by adjusting production conditions of polycarbonates. Examples of the polycarbonate polyols include polycarbonates having hydroxyl groups at least at both ends of the main chain. Examples of the polybutadiene polyols include polybutadienes having hydroxyl groups at least at both ends of the main chain. Examples of the polymer polyols include those obtained by polymerizing vinyl monomers such as acrylonitrile and styrene in polyether polymers. Examples of the silicone polyols include polysiloxanes having hydroxyl groups at least at both ends of the main chain.

The polyol preferably has a hydroxyl value of 150 to 400 mg KOH/g, and more preferably 200 to 300 mg KOH/g. Here, the hydroxyl value is the number of milligrams of potassium hydroxide required to completely acetylate free hydroxyl groups in 1 gram of a sample with acetic anhydride, and then, to neutralize the sample (see JIS K 1557 2007).

The polyol has a number average molecular weight of preferably 200 to 1000 g/mol, and more preferably 400 to 700 g/mol. The number average molecular weight herein is the number average molecular weight on polystyrene conversion measured by gel permeation chromatography.

The number of functional groups (fn) in the polyol is preferably 2 to 6, more preferably 2 to 4, and still more preferably 2 to 3. The number of functional groups (fn) per polyol molecule is obtained from the following formula using the hydroxyl value (OHV) and the number average molecular weight (Mn) of the polyol.

$$\mathrm{fn} = \mathrm{Mn(g/mol)} \times \mathrm{OHV(mg\ KOH/g)/56110}$$

In the composition of the present invention, the content of the polyol is appropriately adjusted according to the content of the polyisocyanate as described later. The content of the polyol is, for example, 15 to 50% by mass, and preferably 30 to 45% by mass.

The polyisocyanate used for the composition of the present invention is a compound having a plurality of isocyanate groups. Examples of the polyisocyanate include aliphatic, alicyclic, aromatic, or araliphatic polyisocyanates, and modified products of these polyisocyanates. Examples of the modified products of polyisocyanates include polyisocyanates having a structure of uretdione, isocyanurate, urethane, urea, allophanate, biuret, carbodiimide, iminooxadiazinedione, oxadiazinetrione, oxazolidone or the like. Furthermore, an isocyanate group-containing prepolymer obtained by a reaction between a polyol and a polyisocyanate may be used as the polyisocyanate.

Among the polyisocyanates, examples of the aromatic polyisocyanates include phenylene diisocyanate, tolylene diisocyanate, xylylene diisocyanate, diphenylmethane diisocyanate, dimethyldiphenylmethane diisocyanate, triphenylmethane triisocyanate, naphthalene diisocyanate, and polymethylene polyphenyl polyisocyanate. Examples of the alicyclic polyisocyanates include cyclohexylene diisocyanate, methylcyclohexylene diisocyanate, isophorone diisocyanate, dicyclohexylmethane diisocyanate, and dimethyldicyclohexylmethane diisocyanate. Examples of the aliphatic polyisocyanates include methylene diisocyanate, ethylene diisocyanate, propylene diisocyanate, tetramethylene diisocyanate, and hexamethylene diisocyanate. These polyisocyanates may be used alone or in combination of two or more.

The polyisocyanate preferably has an isocyanate group content of 20 to 40% by mass, and more preferably 25 to 35% by mass. In this specification, the isocyanate group content is determined according to JIS K 1603.

In the composition of the present invention, from a viewpoint of forming a polyisocyanurate foam, the content of the polyisocyanate is adjusted to make isocyanate index high. Specifically, the content of the polyisocyanate is preferably adjusted to an amount that makes the isocyanate index 200 to 500, and more preferably 250 to 350. In this specification, the isocyanate index is a value obtained by multiplying the following ratio by 100: a ratio of isocyanate groups of the polyisocyanate to the total of active hydrogens that react with the isocyanate groups such as the polyol and the blowing agent (carboxylic acids or water).

The blowing agent used for the composition of the present invention comprises a hydrofluoroolefin, at least one carboxylic acid selected from the group consisting of a monocarboxylic acid and a dicarboxylic acid, and water.

A hydrofluoroolefin (HFO) is a blowing agent preferably used as a non-fluorocarbon physical blowing agent. HFOs are fluorine atom-containing olefin compounds. Those further containing a halogen atom other than fluorine (for example, a chlorine atom) are also included in HFOs. HFOs further containing a chlorine atom are referred to as hydrochlorofluoroolefins (HCFOs).

HFOs turn into gas due to heat generated during foam formation, and the gas causes a foam. However, HFOs have the following problem. That is, when forming a polyisocyanurate foam, the use of an HFO in combination with water as a chemical blowing agent deteriorates surface quality, particularly, smoothness of a formed article. In contrast, according to the composition of the present invention, using a specific carboxylic acid as a chemical blowing agent in combination with an HFO forms a polyisocyanurate foam that enables excellent surface quality, particularly, smoothness of a formed article.

The hydrofluoroolefin preferably has two to five carbon atoms, and preferably three to seven fluorine atoms. The molecular weight of the HFO is preferably 100 to 200. Specific examples of the HFO include 1,2,3,3,3-pentafluoropropene, 1,3,3,3-tetrafluoropropene, 2,3,3,3-tetrafluoropropene, 1,2,3,3-tetrafluoropropene, 3,3,3-trifluoropropene, 1,1,1,4,4,4-hexafluorobutene, 1-chloro-3,3,3-trifluoropropene, 2-chloro-3,3,3-trifluoropropene, 3,3-dichloro-3-fluoropropene, 2-chloro-1,1,1,4,4,4-hexafluorobutene, and 2-chloro-1,1,1,3,4,4,4-heptafluorobutene. These HFOs may be either cis isomers or trans isomers. These HFOs may be used alone or in combination of two or more.

In the composition of the present invention, the content of the hydrofluoroolefin is, for example, 3 to 15% by mass, and preferably 5 to 12% by mass.

A carboxylic acid serving as a blowing agent is classified as a chemical blowing agent. A carboxylic acid can generate carbon dioxide by a reaction with an isocyanate group of a polyisocyanate, leading to foam formation. The carboxylic acid that may be used for the composition of the present invention is a carboxylic acid selected from a monocarboxylic acid (carboxylic acid having one carboxyl group) and a dicarboxylic acid (carboxylic acid having two carboxyl groups). The carboxylic acid preferably has a molecular weight of not more than 200, and preferably not more than 150. Since these carboxylic acids react quickly with isocyanate groups, it is possible to solve problems caused by the behavior of HFOs which are easy to evaporate.

Examples of the monocarboxylic acid preferably include formic acid. Examples of the dicarboxylic acid preferably include glutaric acid and succinic acid. These carboxylic acids may be used alone or in combination of two or more.

In the composition of the present invention, the content of carboxylic acid selected from a monocarboxylic acid and a dicarboxylic acid is, for example, 0.1 to 2% by mass, and preferably 0.1 to 1% by mass.

The composition of the present invention preferably comprises water as a blowing agent from a viewpoint of enhancing the appearance and strength of a foam. Water is classified as a chemical blowing agent similarly to the carboxylic acid. Water can generate carbon dioxide by a reaction with an isocyanate group of a polyisocyanate, leading to foam formation. In the composition of the present invention, it is preferable that the content of water should be moderate from a viewpoint of flame retardancy. The content of water in the composition is not more than 0.5% by mass, preferably not more than 0.3% by mass, and more preferably not more than 0.2% by mass. In the composition of the present invention, the lower limit of the content of water is not particularly limited, but is, for example, 0.05% by mass or more.

In the composition of the present invention, other blowing agents may be used in addition to the hydrofluoroolefin, the carboxylic acid, and water. The total amount of the blowing agent contained in the composition of the present invention is, for example, 5 to 12% by mass.

The composition of the present invention usually further includes a catalyst. Examples of the catalyst preferably include a catalyst which accelerates a reaction between water and an isocyanate (foaming catalyst), a catalyst which accelerates a reaction between a polyol and an isocyanate (resinification catalyst), and a catalyst which accelerates a trimerization reaction of isocyanates (i.e., formation of an isocyanurate ring) (trimerization catalyst). The composition of the present invention comprises at least a trimerization catalyst, and more preferably comprises a foaming catalyst and a trimerization catalyst.

Examples of the foaming catalyst include dimorpholine-2,2-diethyl ether, N,N,N',N'',N''-pentamethyldiethylenetriamine, bis(dimethylaminoethyl) ether, and 2-(2-dimethyl aminoethoxy) ethanol.

Examples of the resinification catalyst include amine catalysts such as triethylenediamine, N,N-dimethylcyclohexylamine, N,N,N',N'-tetramethylethylenediamine, N,N,N',N'',N''',N'''-hexamethyltriethylenetetramine, N-dimethylaminoethyl-N'-methylpiperazine, N,N,N',N'-tetramethylhexamethylenediamine, 1,2-dimethylimidazole, N,N-dimethyl aminopropylamine, and bis(dimethylaminopropyl) amine, and alkanolamine catalysts such as N,N-dimethylaminoethanol, N,N,N'-trimethylaminoethylethanolamine, N,N,N'-trimethyl-N'-hydroxy ethyl bisaminoethyl ether, N-(3-dimethylaminopropyl)-N,N-diisopropanolamine, N-(2-hydroxyethyl)-N'-methylpiperazine, N,N-dimethylaminohexanol, and 5-dimethylamino-3-methyl-1-pentanol.

Examples of the trimerization catalyst include aromatic compounds such as 2,4,6-tris(dialkylaminoalkyl) hexahydro-S-triazine, 1,3,5-tris(N,N-dimethylaminopropyl) hexahydro-S-triazine, 2,4,6-tris(dimethylaminomethyl) phenol, 2,4-bis(dimethylaminomethyl) phenol, and 1-isobutyl-2-methylimidazole, alkali metal salts of carboxylic acids such as potassium acetate, potassium 2-ethylhexanoate, and potassium octylate, and quaternary ammonium salts of carboxylic acids, or other onium salts.

In the composition of the present invention, the content of the catalyst is, for example, 1 to 5% by mass, and preferably 1 to 2.5% by mass. Furthermore, these catalysts may be used alone or in combination of two or more.

The composition of the present invention may further comprise a foam stabilizer. As the foam stabilizer, a surfactant is preferably used. Examples of the surfactant include ionic surfactants such as anionic, cationic, and amphoteric surfactants, and nonionic surfactants, and nonionic surfactants are preferable. Specific preferred examples of the surfactant include silicone-based surfactants and fluorine-based surfactants. In the composition of the present invention, the content of the foam stabilizer is preferably 1 to 5% by mass. Furthermore, these foam stabilizers may be used alone or in combination of two or more.

The composition of the present invention may further comprise a flame retardant. As the flame retardant, a phosphorus-based flame retardant is preferably used. Specific examples of the flame retardant include tricresyl phosphate (TCP), triethyl phosphate (TEP), tris(P-chloroethyl) phosphate (TCEP), and tris(β-chloropropyl) phosphate (TCPP). In addition, solid (powder) flame retardants such as ammonium polyphosphate and red phosphorus are used as necessary. In the composition of the present invention, the content of the flame retardant is preferably 3 to 15% by mass. Furthermore, these flame retardants may be used alone or in combination of two or more.

In the composition of the present invention, as other components, the following components may be appropriately compounded as necessary: a colorant, a filler, an antioxidant, an ultraviolet absorber, a heat stabilizer, a light stabilizer, a plasticizer, a fungicide, an antibacterial agent, an industrial cashew nut shell liquid, a cross-linking agent, a solvent, a viscosity reducing agent, a pressure reducing agent, and a separation inhibitor. The composition may preferably employ commercially available products of these components.

The composition of the present invention comprises a polyol component and a polyisocyanate component. The polyol component herein contains a polyol and usually contains a blowing agent, a foam stabilizer, a flame retardant, a catalyst or the like. The polyisocyanate component herein contains a polyisocyanate, and optionally contains an additive such as a blowing agent or a flame retardant.

The composition of the present invention can be prepared by mixing various components appropriately selected as necessary. For example, the composition of the present invention can be prepared by mixing a polyol component containing a polyol and a blowing agent with a polyisocyanate component containing a polyisocyanate.

Next, the polyisocyanurate foam of the present invention will be described in detail. The polyisocyanurate foam of the present invention is formed from the aforementioned composition for forming a polyisocyanurate foam of the present invention. Since the composition of the present invention comprises a polyol and a polyisocyanate, a reaction proceeds by mixing both compounds, which enables formation of a polyisocyanurate foam. A temperature at which the polyisocyanurate foam is formed is preferably 20 to 80°C.

A foaming method of a polyisocyanurate foam is not particularly limited, and it is possible to employ known foaming techniques such as hand mixing foaming, simplified foaming, an injection method, a froth injection method, and a spray method. Furthermore, a method for forming a polyisocyanurate foam is not particularly limited, and it is possible to employ known forming techniques such as mold forming, slab forming, laminate forming, and on-site foam forming.

The polyisocyanurate foam of the present invention is employable for various applications such as ships and vessels, vehicles, plants, heat insulating apparatuses, constructions, engineering, furniture, and interiors. However, due to its excellent heat insulating performance and surface quality, particularly, smoothness of a formed article, the polyisocyanurate foam of the present invention is preferably used for heat insulating apparatuses, specifically, heat insulation members of refrigerated warehouses or cold storage warehouses.

Since the polyisocyanurate foam of the present invention enables excellent surface quality, particularly, smoothness of a formed article, the polyisocyanurate foam of the present invention is preferably provided with a surface material, more preferably, a metal surface material. In this specification, the polyisocyanurate foam provided with a surface material is a plate-like composite material in which a surface material such as a foil or a plate is attached to one or both sides of the polyisocyanurate foam and is employable as a heat insulating material for various applications.

Preferred examples of an adherend such as the surface material include inorganic materials such as metals, particularly, aluminum and alloys thereof, stainless steel and alloys thereof, iron and alloys thereof, and copper and alloys thereof. Furthermore, a surface of the adherend to which the composition adheres may be covered with a coating as desired. Examples of the coating include organic polymer coating agents such as polyester resins. The adherend preferably has a thickness of 0.2 to 0.6 mm.

The polyisocyanurate foam of the present invention preferably has a density of 25 to 70 kg/m3, and more preferably 40 to 60 kg/m3. In this specification, the density of the polyisocyanurate foam is measured according to JIS K 7222: 2005.

The polyisocyanurate foam of the present invention preferably has a thermal conductivity of 0.0190 to 0.0280 W/m·K, and more preferably 0.0200 to 0.0260 W/m·K, when the measurement center temperature is 23°C. In this specification, the thermal conductivity of the polyisocyanurate foam is measured in accordance with JIS A 1412-2: 2016.

The polyisocyanurate foam of the present invention exhibits excellent flame retardancy. In this specification, "excellent flame retardancy" means that a total heat release measured by the reaction-to-fire test (cone calorimeter method) specified in ISO 5660 is 8 MJ/m2 or less.

The polyisocyanurate foam of the present invention has a total heat release of preferably 8 MJ/m2 or less, and more preferably 7 MJ/m2 or less, when measured by the reaction-to-fire test (cone calorimeter method) specified in ISO 5660. A maximum heat release rate is preferably 150 kw/m2 or less, and more preferably 60 kw/m2 or less. A loss on heat is preferably 50 wt% or less, and more preferably 20 wt% or less.

In addition, in this specification, the measuring method by the reaction-to-fire test (cone calorimeter method) specified in ISO 5660 is based on the method to be described in Examples.

<Application of Flame Retardant Polyisocyanurate Foam>

Having excellent flame retardancy, the polyisocyanurate foam of the present invention is available for various applications which require flame retardancy.

In particular, the flame retardant polyisocyanurate foam of the present invention is advantageously employed as a building material and a heat insulating material used in various facilities such as complex housing or apartment buildings, freestanding houses, schools, and commercial buildings, and also, in pipes of plants, automobiles, and railway vehicles.

Therefore, according to a preferred aspect, there is provided a heat insulating material comprising the flame retardant polyisocyanurate foam of the present invention.

In addition, according to another preferred aspect, there is provided a building material comprising the flame retardant polyisocyanurate foam of the present invention.

**Examples**

Hereinafter, the present invention will be described in more detail with reference to Examples. However, the present invention is not limited to the following Examples.

1. Outline

A polyol component containing a polyol and a blowing agent is mixed with a polyisocyanate component containing a polyisocyanate by a high-pressure foaming machine so as to prepare a foam-forming composition. The foam-forming composition is injected into a mold having the upper and lower sides each provided with a metal surface material, whereby forming a polyisocyanurate foam provided with metal surface materials. The maximum dent and smoothness in the lower surface of the obtained formed article is measured and evaluated.

2. Device and Instrument

High-pressure foaming machine (HK-650P, manufactured by Hennecke)
Disposable chopsticks
Stopwatch (with lap function)
Mold (made of aluminum, inner dimensions: length 2000 mm, width 900 mm, thickness 100 mm)

3. Material

1) Polyol

Polyol A: Polyester polyol [Maximol RLK-087: manufactured by Kawasaki Kasei Chemicals Ltd., the number of functional groups: 2.0, hydroxyl value: 200 mg KOH/g, number average molecular weight: 561 g/mol]
Polyol B: Polyester polyol [Maximol RFK-505: manufactured by Kawasaki Kasei Chemicals Ltd., the number of functional groups: 2.0, hydroxyl value: 250 mg KOH/g, number average molecular weight: 449 g/mol]
Polyol C: Polyether polyol [SBU polyol S429: manufactured by Sumika Covestro Urethane Co., Ltd., the number of functional groups: 3, hydroxyl value: 250 mg KOH/g, number average molecular weight: 673 g/mol]
Polyol D: Polyester polyol [Maximol RAK-253: manufactured by Kawasaki Kasei Chemicals Ltd., the number of functional groups: 2, hydroxyl value: 360 mg KOH/g, number average molecular weight: 312 g/mol]

2) Polyisocyanate

Polyisocyanate A: Polymeric MDI [Sumidur 44V20 L: manufactured by Sumika Covestro Urethane Co., Ltd., isocyanate group content: 31.5% by mass]

3) Blowing Agent

Carboxylic acid blowing agent A: Formic acid
Carboxylic acid blowing agent B: Succinic acid
Carboxylic acid blowing agent C: Glutaric acid

Blowing agent A: Water
Blowing agent B: HCFO-1233zd (molecular weight 130)
Blowing agent C: HFO-1336mzz (Z) (molecular weight 164)

4) Other additives

Catalyst A: Dimorpholine-2,2-diethyl ether (foaming catalyst)
Catalyst B: 1,2-dimethylimidazole 70% by mass + diethylene glycol 30% by mass (resinification catalyst)
Catalyst C: Potassium octylate (trimerization catalyst)
Catalyst D: Quaternary ammonium salt solution (trimerization catalyst)

Foam stabilizer: Silicone-based nonionic surfactant [TEGOSTAB B8460: manufactured by Evonik Japan Co., Ltd.]
Flame retardant: Tris(2-chloroisopropyl) phosphate

5) Surface material

Aluminum surface material having a thickness of 0.4 mm

4. Method

<Preparation of Polyol Component>

1) To prepare a polyol component having the formulation shown in Table 1, put a polyol, a catalyst, and the like, excluding a blowing agent, in a nitrogen-substituted mixer, and mix those components.
2) Stir the mixture for 30 minutes or more, and visually check that the mixture is sufficiently stirred.

3) Add the blowing agent to the resulting mixture and mix thoroughly to prepare the polyol component. After mixing, weigh the polyol component. When the polyol component reduces in weight, add the blowing agent, and mix again.

<Production and Evaluation of Polyisocyanurate Foam>

4) Use HK-650P, a high-pressure foaming machine manufactured by Hennecke, to mix the polyol component and a polyisocyanate component adjusted to 19 to 23°C at a mixing mass ratio shown in Table 1 so as to prepare a foam-forming composition. Perform injection mold forming at a discharge pressure of 12 MPa.

5) Preheat a mold to 55°C. Arrange aluminum surface materials on the upper and lower sides of the mold. Inject the foam-forming composition at a central point of the mold.

6) Inject the foam-forming composition until a polyisocyanurate foam overflows in the longitudinal direction of the mold. Cut semicircular ends of the polyisocyanurate foam, and sample a rectangular parallelepiped. Measure the weight and volume of the sample, and calculate a just density (kg/m3) of the sample. A density of a sample filled in a mold is referred to as "just density".

7) Calculate a just weight in the mold (inner dimensions: length 2000 mm, width 900 mm, thickness 100 mm) from the just density. Inject the foam-forming composition in an amount 1.25 times the just weight so as to prepare the polyisocyanurate foam. A weight of a foam obtained from a just density is referred to as "just weight".

8) After 30 minutes from the injection of the foam-forming composition, take the polyisocyanurate foam provided with the surface material out of the mold.

9) After removing the polyisocyanurate foam, place the polyisocyanurate foam under the condition of 0°C within 30 minutes, and then, allow the polyisocyanurate foam to stand for about 24 hours.

10) Place a straight measure at a right angle on the surface material that was disposed on the lower side of the mold. Use a taper gauge (Niigata Seiki Co., Ltd. 271A) to measure the maximum value of a gap between the straight measure and the surface material. The results are shown in Table 1.

11) Under a fluorescent lamp (straight tube type), visually check an image of fluorescent light reflected on the surface material that was disposed on the lower side of the mold. Evaluate the image according to the following criteria. The results are shown in Table 1.

(Evaluation Criteria)

⊚: Having a smooth surface, and showing a straight image of the fluorescent lamp.

○ : Having a smooth surface, and showing a straight image of the fluorescent lamp but with slightly fine irregularities.

×: Having a non-smooth surface, and showing an undulating image of the fluorescent lamp.

12) To confirm reactivity of the foam-forming composition, inject the foam-forming composition into a 2 L disposable cup at a predetermined temperature and pressure before the foam-forming composition overflows. Touch the injected foam-forming composition with chopsticks, and measure the time until the foam-forming composition starts to draw yarn as the gel time (seconds). Raw material temperature: 19 to 23°C, disposable cup temperature: 20 to 30°C, injection pressure: 12 MPa. The results are shown in Table 1.

<Evaluation on Flame Retardancy of Polyisocyanurate Foam>

The flame retardancy (total heat release) of the polyisocyanurate foam was measured by the following device and conditions according to ISO 5660.

Device: Cone Calorimeter C4 manufactured by Toyo Seiki Seisaku-sho, Ltd.

Condition: Radiant heat: 50 kW/m2

Sample position: 60 mm (distance from the cone heater to the surface material being a sample surface)

Heating time: 20 minutes

Sample size: 100 x 100 x 40 mm (cut out at the center of a panel with no dent, including the surface material of the lower surface)

Panel curing period: 3 days (after forming)

Sample curing period: 1 day (after cutting)

When the measured total heat release was 8 MJ/m2 or less, the polyisocyanurate foam was evaluated to have remarkable flame retardancy (flame retardancy ○), and when the total heat release was higher than 8 MJ/m2, the polyisocyanurate foam was evaluated not to have remarkable flame retardancy (flame retardancy x).

(Comparative Examples 1-2 and Examples 1-14)

According to the description in "3. Method," polyisocyanurate foams of Comparative Examples 1-2 and Examples 1-14 were prepared, and the surface quality and flame retardancy of the polyisocyanurate foams were evaluated. The results are shown in Table 1.

[Table 1] (part I)

| | | | Comparative Example 1 | Example 1 | Example 2 | Example 3 | Example 4 | Example 5 | Example 6 | Example 7 |
|---|---|---|---|---|---|---|---|---|---|---|
| Polyol component | Polyol A | Parts by mass | 50 | 50 | 50 | 50 | 50 | 50 | 50 | 50 |
| | Polyol B | | 25 | 25 | 25 | 25 | 25 | 25 | 25 | 25 |
| | Polyol C | | 25 | 25 | 25 | 25 | 25 | 25 | 25 | 25 |
| | Foam stabilizer | | 5 | 5 | 5 | 5 | 5 | 5 | 5 | 5 |
| | Flame retardant | | 15 | 15 | 15 | 15 | 15 | 15 | 15 | 15 |
| | Carboxylic acid blowing agent A | | | 0.1 | 0.2 | 0.3 | | | | |
| | Carboxylic acid blowing agent B | | | | | | 0.3 | 0.6 | 0.9 | |
| | Carboxylic acid blowing agent C | | | | | | | | | 0.3 |
| | Polyol D | | 3.5 | 3.5 | 3.5 | 3.5 | 3.5 | 3.5 | 3.5 | 3.5 |
| | Catalyst A | | 3 | 3 | 3 | 3 | 3 | 3 | 3 | 3 |
| | Catalyst B | | 0.3 | 0.3 | 0.3 | 0.3 | 0.3 | 0.3 | 0.3 | 0.3 |
| | Catalyst C | | 2.5 | 2.5 | 2.5 | 2.5 | 2.5 | 2.5 | 2.5 | 2.5 |
| | Catalyst D | | 0.5 | 0.5 | 0.5 | 0.5 | 0.5 | 0.5 | 0.5 | 0.5 |
| | Blowing agent | | 0.4 | 0.4 | 0.4 | 0.4 | 0.4 | 0.4 | 0.4 | 0.4 |
| | Blowing agent B | | 33 | 33 | 33 | 33 | 33 | 33 | 33 | 33 |
| | Blowing agent C | | | | | | | | | |
| Polyisocyanate component | Polyisocyanate A | | 195 | 196 | 197 | 198 | 196 | 197 | 198 | 196 |
| Isocyanate index | | | 313 | 313 | 313 | 313 | 311 | 309 | 307 | 311 |
| Mixing mass ratio (polyol component / polyisocyanate component | | | 100/119 | 10/120 | 100/121 | 100/121 | 100/120 | 100/120 | 100/121 | 100/120 |
| Reactivity: gel time (second) | | | 70-90 | 70-90 | 70-90 | 70-90 | 70-90 | 70-90 | 70-90 | 70-90 |
| | | | | | | | | | | |
| Polyisocyanurate foam density (kg / m$^3$) | | | 40-60 | 40-60 | 40-60 | 40-60 | 40-60 | 40-60 | 40-60 | 40-60 |

| | | Comparative Example 1 | Example 1 | Example 2 | Example 3 | Example 4 | Example 5 | Example 6 | Example 7 |
|---|---|---|---|---|---|---|---|---|---|
| Flame retardancy | Total heat release (MJ / $m^2$) n = 2 average | 3.33 | 3.4 | 3.2 | 3.2 | 3.5 | 3.7 | 3.6 | 3.5 |
| | Determination result | ○ | ○ | ○ | ○ | ○ | ○ | ○ | ○ |
| Maximum dent in injection lower surface (mm) | | 0.070 | 0.020 | 0.010 | 0.005 | 0.020 | 0.015 | 0.005 | 0.020 |
| Smoothness of surface | | × | ○ | ⊙ | ⊙ | ○ | ⊙ | ⊙ | ○ |

[Table 1] (cont. Part II)

| | | | Example 8 | Example 9 | Example 10 | Example 11 | Example 12 | Example 13 | Example 14 | Comparative Example 2 |
|---|---|---|---|---|---|---|---|---|---|---|
| Polyol component | Polyol A | Parts by mass | 50 | 50 | 50 | 50 | 50 | 50 | 50 | 50 |
| | Polyol B | | 25 | 25 | 25 | 25 | 25 | 25 | 25 | 25 |
| | Polyol C | | 25 | 25 | 25 | 25 | 25 | 25 | 25 | 25 |
| | Foam stabilizer | | 5 | 5 | 5 | 5 | 5 | 5 | 5 | 5 |
| | Flame retardant | | 15 | 15 | 15 | 15 | 15 | 15 | 15 | 15 |
| | Carboxylic acid blowing agent A | | | | 0.2 | | | 0.2 | 0.2 | 0.2 |
| | Carboxylic acid blowing agent B | | | | | 0.6 | | | | |
| | Carboxylic acid blowing agent C | | 0.6 | 0.9 | | | 0.6 | | | |
| | Polyol D | | 3.5 | 3.5 | 3.5 | 3.5 | 3.5 | 3.5 | 3.5 | 3.5 |
| | Catalyst A | | 3 | 3 | 3 | 3 | 3 | 3 | 3 | 3 |
| | Catalyst B | | 0.3 | 0.3 | 0.3 | 0.3 | 0.3 | 0.3 | 0.3 | 0.3 |
| | Catalyst C | | 2.5 | 2.5 | 2.5 | 2.5 | 2.5 | 2.5 | 2.5 | 2.5 |
| | Catalyst D | | 0.5 | 0.5 | 0.5 | 0.5 | 0.5 | 0.5 | 0.5 | 0.5 |
| | Blowing agent | | 0.4 | 0.4 | 0.4 | 0.4 | 0.4 | 1.2 | 1.7 | 2.2 |
| | Blowing agent B | | 33 | 33 | | | | 31 | 29 | 27 |
| | Blowing agent C | | | | 41 | 41 | 41 | | | |
| Polyisocyanate component | Polyisocyanate A | | 197 | 198 | 197 | 197 | 197 | 225 | 248 | 271 |
| Isocyanate index | | | 310 | 308 | 313 | 309 | 310 | 313 | 313 | 313 |
| Mixing mass ratio (polyol component / polyisocyanate component) | | | 100/120 | 100/121 | 100/115 | 100/115 | 100/115 | 100/139 | 100/154 | 100/170 |
| Reactivity: gel time (second) | | | 70-90 | 70-90 | 70-90 | 70-90 | 70-90 | 70-90 | 70-90 | 70-90 |
| | | | | | | | | | | |

(continued)

| | Example 8 | Example 9 | Example 10 | Example 11 | Example 12 | Example 13 | Example 14 | Comparative Example 2 |
|---|---|---|---|---|---|---|---|---|
| Polyisocyanurate foam density (kg / m$^3$) | 40-60 | 40-60 | 40-60 | 40-60 | 40-60 | 40-60 | 40-60 | 40-60 |
| Flame retardancy — Total heat release (MJ / m$^2$) n = 2 average | 3.5 | 3.7 | 2.3 | 2.4 | 2.7 | 5.6 | 7.9 | 15.6 |
| Flame retardancy — Determination result | ○ | ○ | ○ | ○ | ○ | ○ | ○ | × |
| Maximum dent in injection lower surface (mm) | 0.020 | 0.01 | 0.005 | 0.010 | 0.010 | 0.01 | 0.01 | 0.005 |
| Smoothness of surface | ○ | ⊙ | ⊙ | ⊙ | ⊙ | ⊙ | ⊙ | ⊙ |

Table 1 shows that the polyisocyanurate foams of Examples are superior to the polyisocyanurate foam of Comparative Example 1 in surface quality of formed articles. Furthermore, the polyisocyanurate foams of Examples have excellent flame retardancy, compared with the polyisocyanurate foam of Comparative Example 2.

**Claims**

1. A composition for forming a polyisocyanurate foam, the composition comprising:

   a polyol;
   a polyisocyanate; and
   a blowing agent,
   wherein the blowing agent comprises a hydrofluoroolefin, at least one carboxylic acid selected from the group consisting of a monocarboxylic acid and a dicarboxylic acid, and water, and
   the amount of water contained in the composition is not more than 0.5% by mass.

2. The composition for forming a polyisocyanurate foam according to claim 1, wherein the carboxylic acid has a molecular weight of not more than 200.

3. The composition for forming a polyisocyanurate foam according to claim 1 or 2, wherein the monocarboxylic acid is formic acid.

4. The composition for forming a polyisocyanurate foam according to any one of claims 1 to 3, wherein the dicarboxylic acid is selected from glutaric acid and succinic acid.

5. A polyisocyanurate foam formed from the composition for forming a polyisocyanurate foam according to any one of claims 1 to 4.

6. The polyisocyanurate foam according to claim 5, wherein the polyisocyanurate foam is provided with a surface material.

7. The polyisocyanurate foam according to claim 6, wherein the surface material is a metal surface material.

Europäisches
Patentamt

European
Patent Office

Office européen
des brevets

# EUROPEAN SEARCH REPORT

Application Number

EP 19 21 2080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/303778 A1 (BERTUCELLI LUIGI [IT] ET AL) 20 October 2016 (2016-10-20) * examples 1-10; tables 1, 3 * * paragraph [0136] * * paragraph [0142] * * paragraphs [0129], [0180] * | 1-7 | INV. C08G18/09 C08G18/16 C08G18/20 C08G18/42 C08G18/76 C08G18/79 C08J9/14 C08J9/08 C08K5/5419 |
| A | US 2019/153187 A1 (TOMASI GIANPAOLO [DE] ET AL) 23 May 2019 (2019-05-23) * example 9; table 1b * * paragraph [0077] * * paragraph [0092] * * paragraph [0041] * | 1-7 | |

TECHNICAL FIELDS
SEARCHED (IPC)

C08G
C08J
C08K

The present search report has been drawn up for all claims

| Place of search | Date of completion of the search | Examiner |
|---|---|---|
| Munich | 29 April 2020 | Ojea Jimenez, Isaac |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 2080

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2020

| Patent document cited in search report | | | Publication date | Patent family member(s) | | | Publication date |
|---|---|---|---|---|---|---|---|
| US 2016303778 | A1 | | 20-10-2016 | CN | 104334599 | A | 04-02-2015 |
| | | | | EP | 2855549 | A1 | 08-04-2015 |
| | | | | ES | 2651388 | T3 | 26-01-2018 |
| | | | | JP | 6507095 | B2 | 24-04-2019 |
| | | | | JP | 2015520260 | A | 16-07-2015 |
| | | | | PL | 2855549 | T3 | 30-03-2018 |
| | | | | RU | 2014152834 | A | 20-07-2016 |
| | | | | US | 2015118476 | A1 | 30-04-2015 |
| | | | | US | 2016303778 | A1 | 20-10-2016 |
| | | | | WO | 2013174844 | A1 | 28-11-2013 |
| US 2019153187 | A1 | | 23-05-2019 | CN | 109153764 | A | 04-01-2019 |
| | | | | EP | 3458491 | A1 | 27-03-2019 |
| | | | | JP | 2019516841 | A | 20-06-2019 |
| | | | | KR | 20190009784 | A | 29-01-2019 |
| | | | | US | 2019153187 | A1 | 23-05-2019 |
| | | | | WO | 2017198747 | A1 | 23-11-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018119034 A
- JP 2005307146 A
- JP 2014091827 A